# EUROPÄISCHE PATENTANMELDUNG

(11) **EP 1 302 402 A1**
(43) Veröffentlichungstag der Anmeldung: **16.04.2003**
(21) Anmeldenummer: 02025996.6
(22) Anmeldetag: 25.10.1997
(51) Int. Cl.: B65D 1/02

(54) **Behältnis und Verfahren zu seiner Herstellung**

(30) Priorität: 15.11.1996 DE 19647260
(62) Teilanmeldung aus: 97118574.9
(71) Anmelder: Beiersdorf Aktiengesellschaft, 20245 Hamburg (DE)
(72) Erfinder: Tiekenheinrich, Hartmut, 21717 Helmste (DE); Braun, Claus-Dieter, 22301 Hamburg (DE)

(57) **Zusammenfassung**

Im Zweischritt-Spritzgieß-Blasformverfahren hergestelltes Behältnis (B), welches einen Bodenbereich (17) aufweist, wobei die Wandstärke des Bodens (18) mindestens in einem mittleren Bereich desselben größer ist als im Seitenwandbereich des Behältnisses (B).

## Beschreibung

Die Erfindung bezieht sich auf ein im Zweischritt-Spritzgieß-Blasformverfahren hergestelltes, vorzugsweise flaschenartiges Behältnis.

Die Erfindung betrifft weiter ein Verfahren zur Herstellung eines solchen Behältnisses.

Das zweistufige Spritzstreckblasen, d.h. Herstellen einer Pre-Form im Spritzgussverfahren und.Aufblasen der Pre-Form in einer separaten Blasstation, ist durch die DE-OS 27 13 879 bekannt. Der die Pre-Form darstellende Spritzling weist einen fertig geformten Gewindehals auf, auf den auch die Anfassung in der Blasform abgestimmt ist.

Aufgabe der vorliegenden Erfindung ist es ein im Zweischritt-Spritzgieß-Blasverfahren erzeugtes Flach-Behältniss bereit zu stellen, dessen Bodenbereich eine Stabilisierung des Behältnisses erzeugt.

Diese Aufgabe ist zunächst und im wesentlichen bei einem im Zweischritt-Spritzgieß-Blasverfahren hergestellten, vorzugsweise flaschenartigen Behältnis mit den Merkmalen des Anspruchs 1 gelöst, und zwar durch ein im Zweischritt-Spritzgieß-Blasformverfahren hergestellten, vorzugsweise flaschenartigen Behältnis, welches einen Bodenbereich aufweist, wobei die Wandstärke des Bodens jedenfalls in einem mittleren Bereich desselben größer ist als im Seitenwandbereich des Behältnisses. Neben der ohnehin bodenseitig vorliegenden Polydirektionalität von Wandungsabschnitten ergibt sich eine Stabilisierung durch die erläuterte größere Materialanhäufung. Der Boden ist im Vergleich zu dem Seitenwandbereich des Behältnisses im wesentlichen unflexibel. Weiter bringt die Erfindung in Vorschlag, dass das Behältnis quer zu seiner Längserstreckung einen in zwei zueinander senkrechten Haupterstreckungsrichtungen mindestens um das Eineinhalbfache unterschiedliche Abmessungen aufweist. Dem Behältnis ist so ein deutlich unrunder Querschnitt gegeben. Eine stabilisatorisch dennoch zufriedenstellende Lösung liegt auch noch vor, wenn die Abmessungen sich etwa um das Zweifache (größte Abmessung zu kleinster Abmessung) unterscheiden. Um zu einer greifsympathischen/sicheren Form zu gelangen, ist der Querschnitt im wesentlichen rechtwinklig gestaltet bei konvexer Ausbildung der längeren Seiten des Querschnitts des Seitenwandbereichs. Für die Herstellung eines solchen flachen Behältnisses wird auf PP als Werkstoff zurückgegriffen. Auch PET hat sich bewährt.

Weiterhin ist bevorzugt mindestens ein zur Ausrichtung in der Blasform dienender, im Halsbereich des Behältnisses radial vorstehend ausgeformten Vorsprung vorgesehen. Über ein solches Orientierungsmerkmal ist ein sicherer "Schlüssel" für das korrekte Bestücken der Blasform gefunden. Es fungiert als Ausrichtehilfe. Gleichwohl kann ein solcher Vorsprung auch noch in der bewährten Weise als Begrenzungsanschlag für die Schraubkappe dienen. Weiter erweist es sich als vorteilhaft, wenn zwei im Querschnitt im wesentlichen gegenüberliegende Vorsprünge ausgeformt sind. Dadurch verkürzt sich der für die Ausrichtekorrektur benötigte Winkelweg aus einer maximal ungünstigen Stelle um nahezu die Hälfte. Der formseitige Gegenpart ist so eingerichtet, dass je ein Vorsprung der einen bzw. anderen Blasformhälfte zugeordnet ist. Die entsprechende Formnische kann direkt von den fugenseitigen Schließflächen der Blasformhälften ausgehen. Baulich vorteilhaft ist es überdies, wenn der Vorsprung unabhängig von einer Gewindestruktur ausgebildet ist. Konkret wird diesbezüglich so vorgegangen, dass der Vorsprung aus einer umlaufenden Bundausformung im Halsbereich herauswächst.

Das Verfahren zur Herstellung eines im Zweischritt-Spritzgieß-Blasformverfahren hergestellten, vorzugsweise flaschenartigen Behältnisses, wobei zunächst ein Spritzling hergestellt wird und der Spritzling sodann vorzugsweise unabhängig vom Spritzvorgang einer Blasstation zugeführt wird zur Ausformung des Blasbehältnisses, ist durch die Schritte gekennzeichnet, dass der im wesentlichen bezüglich einer Längsachse rotationssymmetrisch ausgebildete Spritzling bezüglich dieser Längsachse zunächst symmetrisch und anschließend unsymmetrisch über den Umfang erwärmt wird. Es wird also eine gleichmäßige Grunderwärmung an der bspw. aus einem Magazin kommenden Pre-Form angewandt, an die eine lokalisierte Erwärmung anschließt. Das Verfahren sieht dabei weiter vor, dass das Behältnis Breitseitenwände und Schmalseitenwände aufweist, wobei die den Breitseitenwänden des Blasbehältnisses zugeordneten Bereiche des Spritzlings auf eine höhere Temperatur erwärmt werden als die den Schmalseitenwänden zugewandten Bereiche des Spritzlings. Die höhere Wärmekapazität ist der Bildung der länger blasgezogenen Wandbereiche bestens zuträglich. Jedwede Rissigkeit ist ausgeschlossen. Es ergibt sich ein völlig klares Streckbild sowie eine harmonische, d. h. glatte Sichtfläche. Weiter wird der Spritzling in Richtung seiner Längsachse unterschiedlich erwärmt. Hierzu kann auch eine Innenerwärmung greifen, wenngleich die Wärmebeaufschlagung auch von außen her als ausreichend wirksam angesehen wird. Konkret ist so vorgegangen, dass der Spritzling in einem Längsmittelbereich auf eine höhere Temperatur erwärmt wird als im Boden- oder Halsansatzbereich. Das erhält dem Halsbereich seine Anfangsform und wirkt sich auch auf den Bodenbereich moderat aus, wo sich durch die erläuterte zentrale Materialanhäufung eine Art Materialvorratskammer erhält, von der nach Bedarf, d.h. zum Beispiel je nach dem Längungsgrad, das wandungsbildende Material genommen wird. Schließlich wird noch vorgeschlagen, dass der Spritzling anhand eines radialen Vorsprungs zur unterschiedlichen Erwärmung im Umfangsbereich ausgerichtet wird. Es genügt einfachst schon eine Patrizen-/Matrizen-Kontur. Bei Ausführung dieses Verfahrens wird die Ausrichtung im wesentlichen an zwei gegenüberliegenden Vorsprüngen vorgenommen.

Der Gegenstand der Erfindung und das Verfahren sind nachstehend eingehender anhand von Zeichnungen erläutert. Es zeigt
- Fig. 1: als Pre-Form den Spritzling in perspektivischer Darstellung, verfahrensgerecht ausgerichtet.
- Fig. 2: das fertige, flaschenartige Behältnis nach dem Verlassen der Blasform, ebenfalls in perspektivischer Darstellung,
- Fig. 3: den Spritzling in Seitenansicht bei dem Betrachter zugewandtem Vorsprung,
- Fig. 4: die Draufsicht auf Fig. 3,
- Fig. 5: den Spritzling in Seitenansicht, gegenüber Fig. 3 um 900 verdreht, dabei beide Vorsprünge zeigend,
- Fig. 6: den Schnitt gemäß Linie VI-VI in Fig. 5,
- Fig. 7: das Behältnis in Seitenansicht,
- Fig. 8: die Draufsicht hierzu,
- Fig. 9: das Behältnis in gegenüber Fig. 7 um 90° verdrehter Seitenansicht,
- Fig. 10: den Schnitt gemäß Linie X-X in Fig. 9, auf einen Tragdorn aufgesteckt,
- Fig. 11: den Schnitt gemäß Linie XI-XI in Fig. 7,
- Fig. 12: den Spritzling in einer Ausrichtestation,
- Fig. 13: die Ausrichtestation bei abgeschlossener Ausrichtung des Spritzlings,
- Fig. 14: im Teilschnitt den Hals- und Halsansatzbereich des Behältnisses, eine Weiterbildung am Vorsprung veranschaulichend, vergrößert,
- Fig. 15: die Draufsicht auf das Behältnis, gegenüber Fig. 14 um 90' gedreht,
- Fig. 16: das mit einer Schraubkappe bestückte Behältnis, in Perspektive, und
- Fig. 17: die Schraubkappe in schaubildlicher Einzeldarstellung mit Einsicht in ihr Inneres.

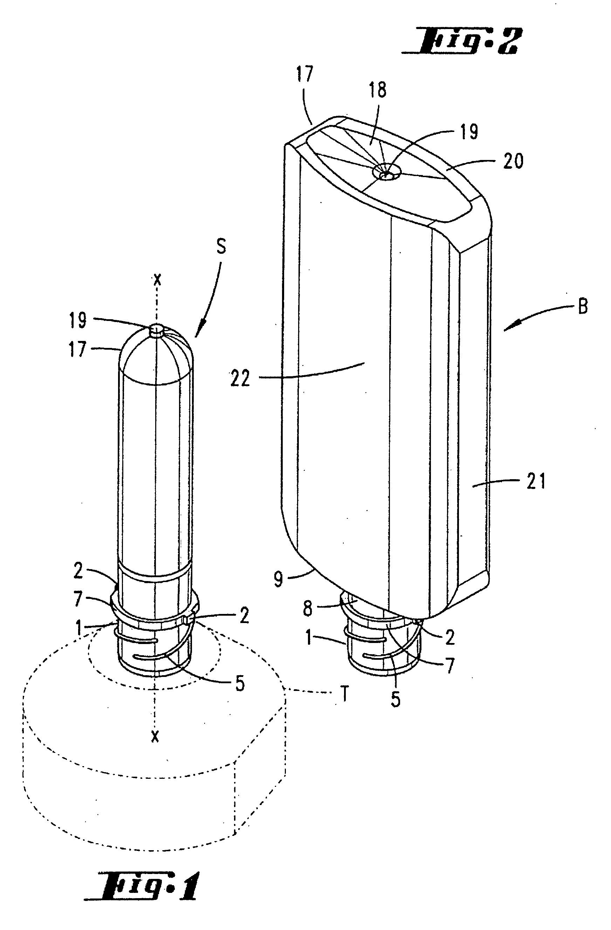

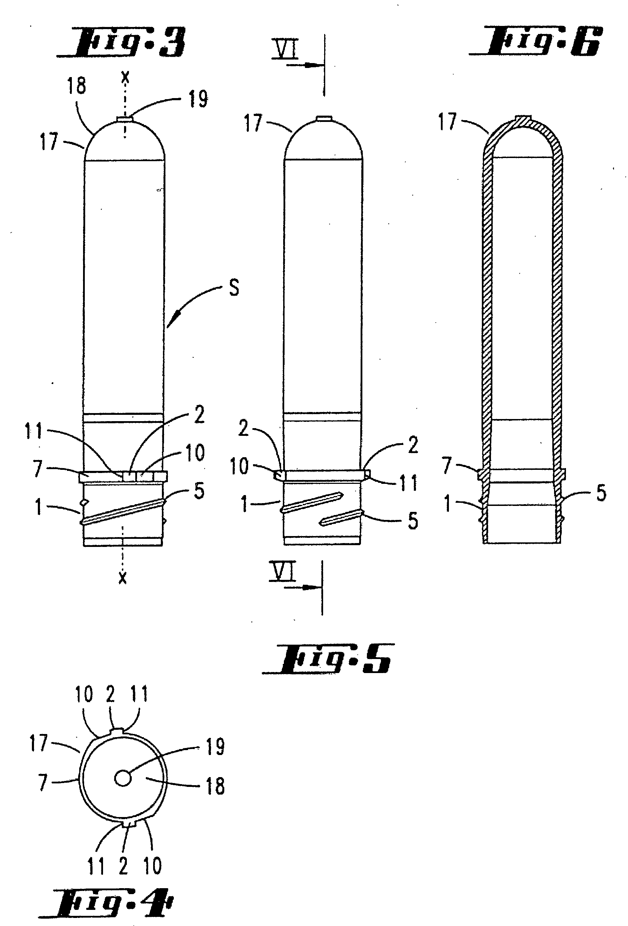

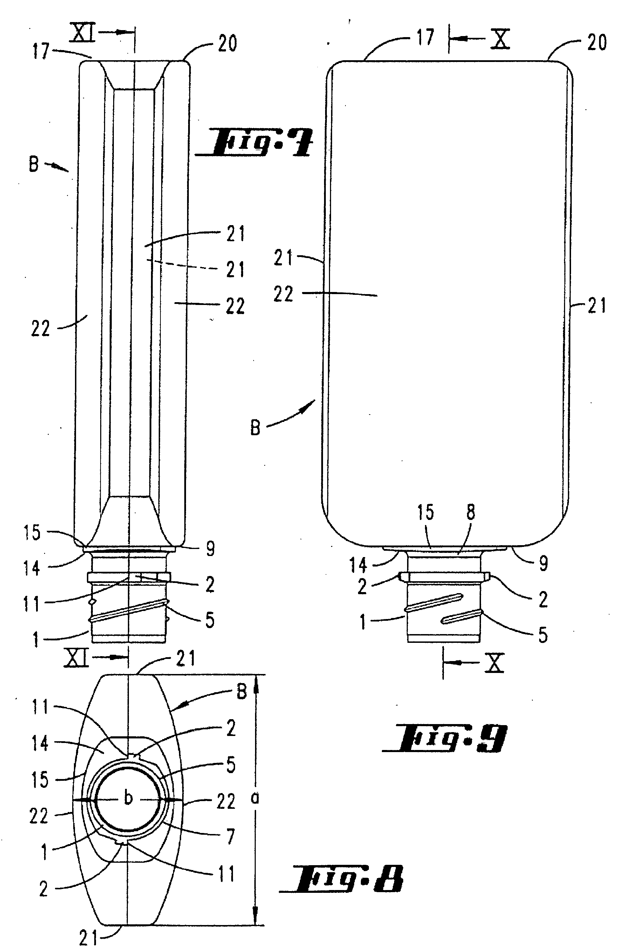

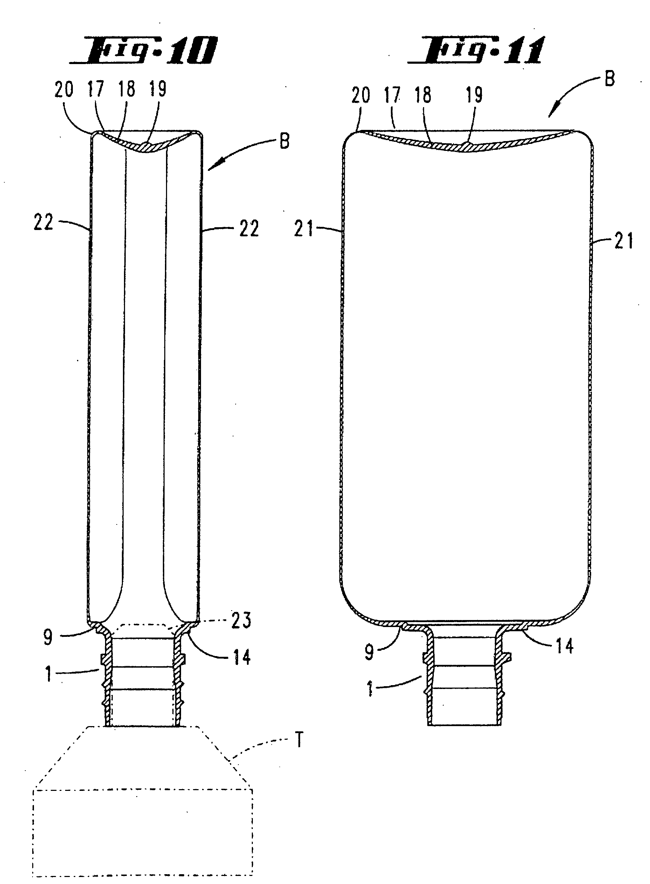

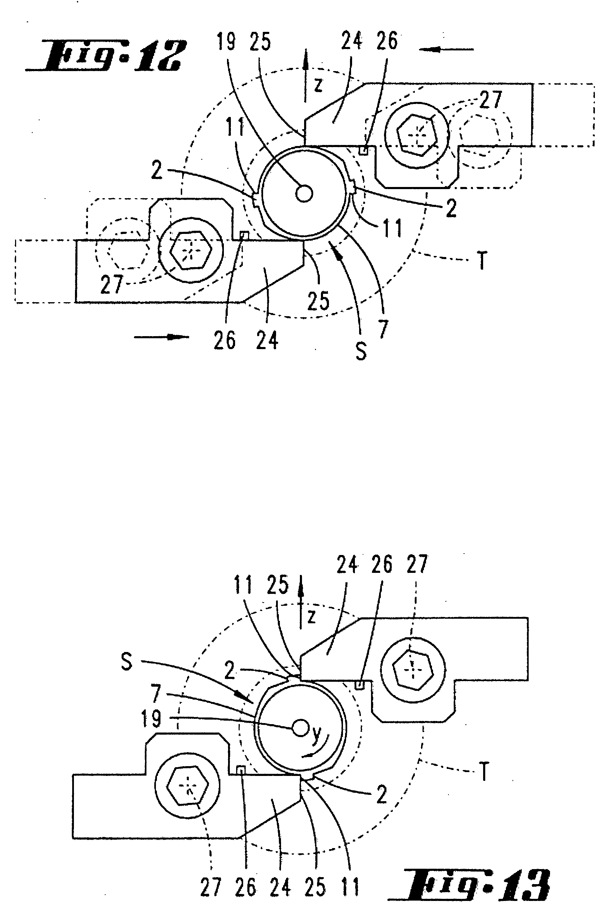

Das in der Zeichnung dargestellte flaschenartige Behältnis B wird im Zweischritt-Spritzgieß-Blasformverfahren hergestellt. Dieser Endform des Behältnisses B geht eine Pre-Form voraus, realisiert als Spritzling S.
Die Spritzlinge S werden beim diesbezüglichen Spritzgießen bezüglich ihres Halsbereichs 1 schon ganz fertiggestellt. Der Halsbereich 1 tritt demgemäß so auch am streckgeblasenen Behältnis B auf.

Der Halsbereich 1 trägt mindestens einen radial vorstehend ausgeformten Vorsprung 2. Letzterer fungiert als Anschlagnocken. Es kann sich um einen einfachen, bspw. kegelförmigen Zapfen handeln, der seine negative Gegenform an der Blasform hat.

Von der Grundfunktion her wirkt der Anschlagnocken als Drehbegrenzungsanschlag für eine den entsprechenden Gegenanschlag 3 aufweisende Schraubkappe 4 (vergl. Fig. 17).
Von einer erweiterten Funktion her dient der Vorsprung 2 nun auch noch zu einer bestimmten Ausrichtung des Spritzlings S in der separaten Blasform. Der Vorsprung 2 wird dabei als Orientierungsmerkmal genutzt, um den im Grunde zylindrischen Spritzling S so auszurichten, dass die am Produkt erkennbare, unrunde, flache Gestalt des Behältnisses B erstreckungsmäßig in einem bestimmten Winkel zum Vorsprung 2 ausgerichtet ist und wobei auch die Schraubkappe 4 in ihrer angepasst unrunden, ebenfalls flachen Gestalt die korrekte Ausrichtung zum Behältnis B erfährt. Ein wesentlicher Gedanke spielt in diese Überlegungen hinein, nämlich der der Bildung unterschiedlich aufgewärmter Zonen, insbesondere deren einwandfrei reproduzierbare Festlegung.

Der Halsbereich 1 trägt zwei Vorsprünge 2. Letztere erstrecken sich auf einer gemeinsamen Querschnittsebene des Halsbereichs 1 liegend. Sie stehen. im wesentlichen in der Diametralen des eine zylindrische Mantelwand aufweisenden Halsbereichs. Die entsprechende Gegenüberlage der beiden Vorsprünge 2 geht besonders deutlich aus Fig. 15 hervor.

Die Vorsprünge 2 sind - die normale Standstellung des Behältnisses B voraussetzend - unterhalb eines an der besagten Mantelwand realisierten Außengewindes 5 angeordnet, welches Außengewinde mit einem passenden Innengewinde 6 der Schraubkappe 4 zusammenwirkt.

Der vorzugsweise paarig vorgesehene Vorsprung 2 ist so unabhängig von der Gewindestruktur geformt. Konkret geht der Vorsprung 2 bzw. gehen die Vorsprünge 2 aus einer umlaufenden Bundausformung 7 am behältnisseitigen Part des Halsbereichs 1 hervor. Die liegt behältnisnah. Es handelt sich um einen Halsansatzbereich 8, der am fertigen Behältnis B einer Schulter 9 erwächst.

Außer dem Abschnitt der Bundausformung 7, welcher die radial ausladenden Vorsprünge 2 ausbildet, ist die Peripherie der Bundausformung 7 so, dass sie das Außengewinde 5 radial nicht überragt. Lediglich der unmittelbar vorsprungformende Part steigt in seinem Rücken kontinuierlich an. Der Rücken des bzw. der Vorsprünge 2 ist im ansteigenden Bereich durch eine Schlüsselfläche 10 unterbrochen. Die Rückenkrümmung geht über gut einen Viertelkreis der Bundausformung 7. Die Schlüsselfläche ist der Grund einer zahnlückenartigen Vertiefung und stellt ebenfalls ein Orientierungsmerkmal.

Der Vorsprung 2 formt eine steile Sperrflanke 11. Die erstreckt sich in der Radialen des Halsbereichs 1. Entsprechend steil ist auch eine Gegensperrflanke 12 am Gegenanschlag 3 der Schraubkappe 4 ausgebildet. Der Gegenanschlag 3 sitzt als zahnartiger Vorsprung am Stirnende einer inneren Ringwand 13 der Schraubkappe 4. Das andere Ende der Ringwand 13 wurzelt in der Decke der Schraubkappe 4. Der Gegenanschlag 3 überläuft am Ende der Zuschraubbewegung der Schraubkappe 4 den Kamm der Bundausformung 7, um anschlagdefiniert gegen die Sperrflanke 11 zu treten.

Die Schulter 9 des fertigen Behältnisses B weist am Fuß des Halsansatzbereichs 8 ein unrundes Plateau 14 auf. Dessen Rand 15 wird in Zuschraubendstellung vom entsprechend umrissangepassten Kappenrand 16 der Schraubkappe 4 schnäpperartig übergriffen. Diese Schnäpperstellung zwischen 15 und 16 kann zum Öffnen des Behältnisses B nur willensbetont überwunden werden.

Wie Fig. 15 weiter entnehmbar, liegt die Sperrflanke 11 in einer Symmetrieebene des Behältnisses B, welche Symmetrieebene die Entformungsebene E-E zwischen den nicht dargestellten Blasformhälften ist. Diese Entformungsebene E-E ist am Blasbehältnis als eine Art feiner "Naht" erkennbar, gebildet als Abdrücke der Innenrandkanten der Schließflächen der Blasformhälften.

An diesen beiden gegeneinandergerichteten Schließflächen sind entsprechend der Anzahl der Vorsprünge 2 trennfugenseitig entsprechende Formnischen berücksichtigt. Durch das korrekte Ausrichten des Spritzlings S gelangt der Vorsprung 2 oder erreichen die Vorsprünge 2 die besagten Formnischen ohne schädigende mechanische Belastung. So ist je ein Vorsprung 2 der einen bzw. anderen Blasformhälfte zugeordnet.

Neben einem Halsbereich 1 weist der sich mantelwandseitig ein im wesentlichen im Durchmessermaß des Halsbereichs zylindrisch fortsetzende Spritzling S anderenends erfindungsgemäß auch einen Bodenbereich auf, bezeichnet mit 17. Der Bodenbereich 17 ist semisphärisch. Die domartige Wölbung geht nach außen. Ihre Wandungsdicke ist gleichmäßig. Sie entspricht der Wandungsdicke des zylindrischen Abschnitts des Spritzlings S und nimmt erst im Halsansatzbereich 8 und im eigentlichen Halsbereich 1 kontinuierlich stufenweise ab, bis etwa auf die Hälfte der Wandungsdicke im eigentlichen, gewindebesetzten Halsbereich 1. Die Flaschenmündung ist innen anfangs auf etwa halber Länge zylindrisch, anschließend sich schwach konisch verengend, dann auf dem Restabschnitt wieder zylindrisch bis etwa auf Höhe des Plateaus 14 (vergl. Fig. 10 und 11).
Ein Blick auf das fertig geblasene Behältnis B macht vor allem in den genannten Schnittdarstellungen (Fig. 10 und 11) deutlich, dass eine Wandstärke des dort gebildeten Bodens 18 jedenfalls in einem mittleren Bereich des Bodens 18 auffallend größer ist als nahe dem Seitenwandbereich, also der gesamten Mantelwand des Behältnisses B. Die Dicke nimmt zur Peripherie des Bodens 18 in alle Richtungen hin kontinuierlich ab. Der Anspritzpunkt des Bodens 18 liegt im Zentrum und ist mit 19 bezeichnet. Auch am Spritzling S ist der Anspritzpunkt 19 sichtbar, dort als die Kuppel auswärts etwas überragende zylinderplättchenförmige Materialanhäufung.

Der Boden 18 ist eingedellt. Die Eindellung ist so, dass peripher ein ebener Standrand 20 vorliegt. Der ist so dünnwandig wie der Seitenwandbereich des Behältnisses B bis hin zum Halsansatzbereich 8.

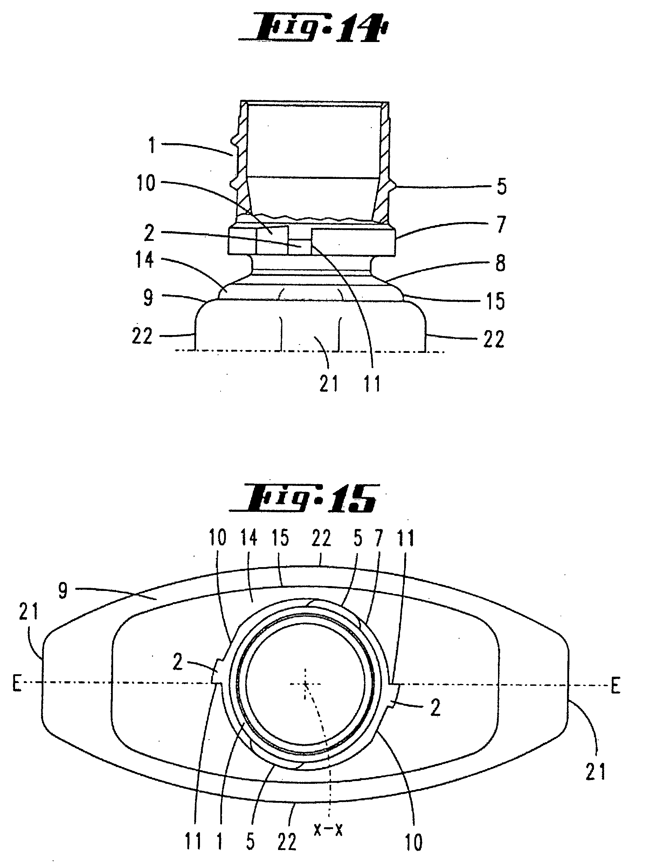

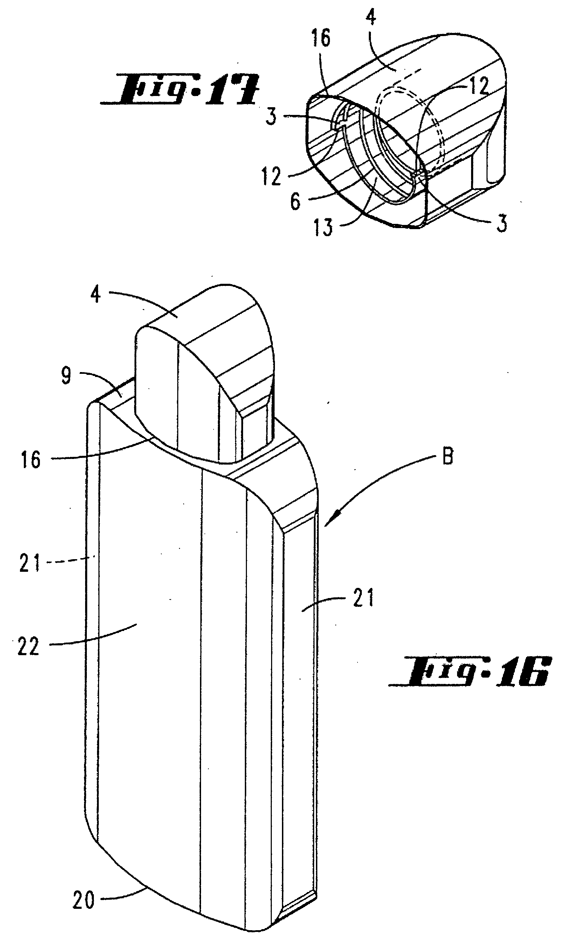

Der Boden 18 fällt somit im Vergleich zum Seitenwandbereich des Behältnisses B weniger bzw. sogar recht unflexibel aus. Ebenso unflexibel und selbsttragend ist der Halsbereich 1. Der somit kollabierbare Seitenwandbereich des Behältnisses B bildet die Voraussetzung, das Behältnis als sogenannte Quetschflasche zu nutzen. Wie oben schon angedeutet, handelt es sich bezüglich des Behältnisses B um ein Flachbehältnis. Die maßlichen Verhältnisse zwischen Boden 18 und Halsansatzbereich 8 sind dabei so, dass das Behältnis B quer zu seiner Längserstreckung in zwei zueinander senkrechten Haupterstreckungsrichtungen mindestens um das Eineinhalbfache unterschiedliche Abmessungen aufweist. Gemäß in den Zeichnungen bevorzugter Ausgestaltung unterscheiden sich die Abmessungen etwa um das Zweifache, und zwar größte Abmessung a zu kleinster Abmessung b (vergl. Fig. 8). Die Länge des Behältnisses B entspricht etwa der doppelten Abmessung a.

Wie Fig. 8 und vor allem auch der Fig. 15 als Vergrößerung entnehmbar, ist der Querschnitt des Behältnisses B im wesentlichen von rechteckiger Gestalt. Von der rechteckigen Grundform bleiben von dem entsprechenden Seitenwandbereich, sprich Mantelwand, im Grunde nur zwei parallel zueinander verlaufende Schmalseitenwände 21 des Behältnisses B. An diese Schmalseitenwände 21 schließen in Richtung der längeren Seiten des Querschnitts von außen gesehen konvex gewölbte Breitseitenwände 22 des Seitenwandbereichs an. Es handelt sich um gleichmäßige Wölbungen, wobei die im Halsbereich 1 liegenden Wölbungszenite einen größeren Abstand zueinander haben als der Durchmesser des Spritzlings S beträgt. Die Breitseitenwände 22 erbringen relativ große, ein kraftvolles Zurückstellen gewährleistende Flächen.
Zur Herstellung des Behältnisses wird PP verwendet. Ein anderer, ebenfalls in diesem Zusammenhang spritztechnisch vorteilhafter Werkstoff ist, wie gefunden wurde, PET.

In Bezug auf das Verfahren wird folgendes ausgeführt: Die Herstellung des Behältnisses B geschieht in zwei Stufen. Über das Spritzgießverfahren wird zunächst der Spritzling S erzeugt. Vorzugsweise losgelöst von diesem Verfahren wird der Spritzling S in einem anschließenden Blasformverfahren auf die endgültige, dargestellte Form des Behältnisses B gebracht. Da der in schnellerem Takt herstellbare Spritzling S wieder abkühlt, wird unter geordnetem Einleiten des Blasformverfahrens seine Erwärmung bewirkt. Ein solches spritzmäßiges Verfahren sieht dabei weiter so aus, dass der im wesentlichen bezüglich seiner Längsachse x-x rotationssymmetrisch ausgebildete Spritzling S bezüglich dieser Längsachse x-x zunächst symmetrisch erwärmt wird. Das geschieht durch Rotationsbewegung eines den Spritzling S haltenden Lind transportierenden Trägers T. Solche Träger sind in Reihe angeordnet und sitzen in Halterungen eines Transportbandes, bspw. einer Kette. Der Spritzling S ist im Bereich seiner Mündungsöffnung kopfüber auf einen passenden Tragdorn 23 des Trägers T aufgesteckt. Es liegt eine reibungsschlüssige Steckverbindung vor. Der Träger T passiert nun eine Wärmestation. Es kann sich hier um einen gestreckt, also linear ausgerichteten Wärmetunnel handeln mit einer Reihe stationärer Erhitzer.

Vor Erreichen der Wärmstation erfolgt ein blasformgerechtes Ausrichten des Spritzlings S zum Träger T hin mit genauer Ausrichtung auf die erläuterten blasformseitigen Orientierungsmerkmale, der dortigen Formnischen also. Die entsprechende Ausrichtung des Spritzlings S bildet die Vorbedingung zur Erlangung der spritzgerecht unterschiedlichen Aufwärmung des Spritzlings S. Diese Ausrichtung erfolgt in der in den Fig. 12 und 13 weitestgehend vereinfacht dargestellten Ausrichtestation. Erkennbar wird die Ausrichtung im wesentlichen an zwei diametral einander gegenüberliegenden Vorsprüngen 2 vorgenommen. Hierzu fahren beidseitig des passierenden Trägers T, quer zum Transportweg also, zwei Ausrichtefinger 24 aus der in strichpunktierter Linienart dargestellten Stellung gegenläufig und versetzt in die in ausgezogenen Linien wiedergegebene Stellung vor (vergl. Fig. 12). Besagte Ausrichtefinger 24 tangieren mit ihren etwa parallelen Innenseiten die Peripherie der Bundausformung 7, an der die erwähnten Vorsprünge 2 exponiert abstehen. Sie liegen also im Wirkungsbereich der zugefahrenen Ausrichtefinger 24, konkreter deren Stirnenden 25. Eine Vor-Ausrichtung der die Längsachse x-x schneidenden Stirnenden 25, welche sich in einer Diametralen liegend befinden, wird über ver- und feststellbare Anschläge 26 erreicht. Die Ausrichtefinger 24 sind je um eine vertikale Achse 27 schwenkbar gelagert, können also bei durch den Rücken der Vorsprünge 2 gegebene Vorstände entsprechend ausweichen. Die tangierende Anlage der Ausrichtefinger 24 ist durch nicht dargestellte Federn gegeben.

Fig. 13 zeigt eine sich unter Drehen des Trägers T im Uhrzeigersinn (vergl. Pfeil y) ergebende, reproduzierbare Ausrichtung des Spritzlings S zum Träger T hin. Hierzu treten die in der Ebene der Transportrichtung (Pfeil z) liegenden Stirnenden 25 gegen die Sperrflanke 11 der Vorsprünge 2. Der Spritzling S wird so relativ zum in Drehung versetzten Träger T festgehalten. Letzterer weist dazu bspw. einen Zahnkranz auf. Der arbeitet mit einer zufahrenden und wieder wegfahrenden. Zahnstange oder dergleichen zusammen. Der Träger T stoppt nun seinerseits in einer bestimmten, wiederfindbaren Winkelstellung zum aufgesteckten Spritzling S. Die Ausrichtefinger 24 fahren in ihre in Fig. 12 in strichpunktierter Linienart eingezeichnete Grundstellung zurück. Träger T und winkelkorrekt zu diesem zugeordneter Spritzling S fahren in die Wärmestation (Richtung Pfeil z). Es kommt dort zu einer bestimmten Anzahl an Drehbewegungen und einem angepasst zeitlichen Verharren unter Erreichen der Grunderwärmung des Spritzlings S. Dann wird die Rotation des Trägers T unterbrochen. Noch in der Wärmestation befindlich, schließt nun an die bisherige symmetrische Wärmebeaufschlagung eine unsymmetrische an, d.h. es werden nur die den Wärmequellen direkt zugewandten Bereiche des Spritzlings S wärmebeaufschlagt. Unter der Maßgabe, dass das Behältnis B Schmalseitenwände 21 und Breitseitenwände 22 aufweisen wird, werden die den Breitseitenwänden 22 des Blasbehältnisses B zugeordneten Bereiche des Spritzlings S auf eine höhere Temperatur erwärmt als die den Schmalseitenwänden zugekehrten Bereiche des Spritzlings S. Diese örtliche, intensivere Erwärmung begünstigt den Blasvorgang gerade in den Zonen, die eine größere "Reckung" durchmachen. Das führt zu qualitativ hohen Behältnissen B. Um den Halsbereich 1 wärmemäßig geringer zu beaufschlagen, ist auch weiter so vorgegangen, dass der Spritzling S in Richtung seiner Längsachse x-x unterschiedlich erwärmt wird. So ist der Spritzling S in seinem Längsmittelbereich auf eine höhere Temperatur erwärmt als im Boden- oder Halsansatzbereich 17 bzw. 8.

Das im Blasformverfahren erzeugte Behältnis B erfährt in der Blasstation auch noch eine Längung in der längeren Erstreckungsrichtung. Auch hierüber wird ein feines, wandungsdickengleiches Ziehen erreicht, wobei jedoch der Boden 18 und der Halsbereich 1, den jeweils speziellen mechanischen Beanspruchungen bestens Rechnung tragend, unflexibler, also standstabiler bleiben.

In der beschriebenen Anlage erfolgt auch noch das Prüfen der Dichtigkeit des Behältnisses und gegebenenfalls auch anschließend die Etikettierung und das automatische Verpacken.

## Patentansprüche

1. Im Zweischritt-Spritzgieß-Blasformverfahren hergestelltes Behältnis (B), welches einen Bodenbereich (17) aufweist, **dadurch gekennzeichnet, dass** die Wandstärke des Bodens (18) mindestens in einem mittleren Bereich desselben größer ist als im Seitenwandbereich des Behältnisses (B).

2. Behältnis nach Anspruch 1, **dadurch gekennzeichnet, dass** es sich um ein flaschenartiges Behältnis handelt.

3. Behältnis nach Anspruch 1 oder 2, **dadurch gekennzeichnet, dass** es sich um ein Flach-Behältnis handelt.

4. Behältnis nach einem der Ansprüche 1 bis 3, **dadurch gekennzeichnet, dass** der Boden (18) im Vergleich zum Seitenwandbereich des Behältnisses (B) im wesentlichen unflexibel ist.

5. Behältnis nach einem der vorstehenden Ansprüche, **dadurch gekennzeichnet, dass** das Behältnis (B) quer zu seiner Längserstreckung einen in zwei zueinander senkrechten Haupterstreckungsrichtungen mindestens um das Eineinhalbfache unterschiedliche Abmessungen aufweist.

6. Behältnis nach Anspruch 5, **dadurch gekennzeichnet, dass** die größte Abmessung zu kleinster Abmessung sich etwa um das Zweifache unterscheiden.

7. Behältnis nach einem der vorstehenden Ansprüche, **dadurch gekennzeichnet, dass** der Querschnitt des Behältnisses (B) im wesentlichen rechteckig gestaltet ist bei konvexer Ausbildung der längeren Seiten des Seitenwandbereichs.

8. Behältnis nach einem der vorstehenden Ansprüche, **dadurch gekennzeichnet, dass** das Behältnis (B) aus PP besteht.

9. Behältnis nach einem der vorstehenden Ansprüche 1 bis 7, **dadurch gekennzeichnet, dass** das Behältnis (B) aus PET besteht.

10. Verfahren zur Herstellung eines im Zweischritt-Spritzgiess-Blasformverfahren hergestellten Flach-Behältnisses (B) nach einem der Ansprüche 1 bis 9, **dadurch gekennzeichnet, dass** zunächst ein Spritzling (S) hergestellt wird und der Spritzling (S) sodann vorzugsweise unabhängig vom Spritzvorgang einer Blasstation zur Ausformung des Blasbehältnisses (B) zugeführt wird und dass der im wesentlichen bezüglich einer Längsachse (x-x) rotationssymmetrisch ausgebildete Spritzling (S) bezüglich dieser Längsachse (x-x) zunächst symmetrisch und anschließend unsymmetrisch über den Umfang erwärmt wird und der Spritzling (S) in Richtung seiner Längsachse (x-x) unterschiedlich erwärmt wird.

11. Verfahren nach Anspruch 10, **dadurch gekennzeichnet, dass** der Spritzling (S) anhand eines radialen Vorsprungs (2) zur unterschiedlichen Erwärmung in Umfangsrichtung ausgerichtet wird.

12. Verfahren nach Anspruch 10 oder 11, wobei das Behältnis (B) Breitseitenwände (22) und Schmalseitenwände (21) aufweist, **dadurch gekennzeichnet, dass** die den Breitseitenwänden (22) des Blasbehältnisses (B) zugeordneten Bereiche des Spritzlings (S) auf eine höhere Temperatur erwärmt werden als die den Schmalseitenwänden (21) zugewandten Bereiche des Spritzlings (S).

13. Verfahren nach einem der Ansprüche 10 bis 12, **dadurch gekennzeichnet, dass** der Spritzling (S) in einem Längsmittelbereich auf eine höhere Temperatur erwärmt wird als im Boden- oder Halsansatzbereich (17 bzw. 8).
